# EUROPÄISCHE PATENTANMELDUNG

(11) **EP 4 015 130 A1**
(43) Veröffentlichungstag der Anmeldung: **22.06.2022**
(21) Anmeldenummer: 20214930.8
(22) Anmeldetag: 17.12.2020
(51) Int. Cl.: B23K 9/173, B23K 9/09

(54) **MEHRFACH-SCHWEISSVERFAHREN**

(71) Anmelder: Fronius International GmbH, 4643 Pettenbach (AT)
(72) Erfinder: Söllinger, Dominik, 4600 Wels-Thalheim (AT)
(74) Vertreter: Patentanwälte Pinter & Weiss OG

(57) **Zusammenfassung**

Um ein Mehrfach-Schweißverfahren mit zumindest zwei abschmelzenden Elektroden (3A, 3B) anzugeben, das stabile Schweißprozesse an den Elektroden (3A, 3B) sowie einen gegenüber dem Mehrfach-Impulsschweißverfahren geringeren Wärmeeintrag in den Grundstoff (6) ermöglicht, ist erfindungsgemäß vorgesehen, dass an den zumindest zwei Elektroden (3A, 3B) jeweils ein Schweißprozess mit einer Kurzschluss-Schweißphase (SPA1, SPB1) und einer Warmschweißphase (SPA2, SPB2) mit relativ zur Kurzschluss-Schweißphase (SPA1, SPB1) höherem Wärmeeintrag in den Grundstoff (6) durchgeführt wird, wobei sich die Kurzschluss-Schweißphase (SPA1, SPB1) und die Warmschweißphase (SPA2, SPB2) periodisch abwechseln und dass die Kurzschluss-Schweißphasen (SPA1, SPB1) der Schweißprozesse der zumindest zwei Elektroden (3A, 3B) anhand zumindest eines festgelegten ersten Synchronisationsereignisses (SEA1, SEB1) je Kurzschluss-Schweißphase (SPA1, SPB1) zeitlich synchronisiert werden.

## Beschreibung

Die Erfindung betrifft ein Verfahren zur Durchführung eines Mehrfach-Schweißverfahrens mit zumindest zwei abschmelzenden Elektroden an einem Grundstoff, wobei an jeder Elektrode nach dem Zünden eines Lichtbogens zwischen der Elektrode und dem Grundstoff ein Schweißprozess durchgeführt wird und wobei die Schweißprozesse der zumindest zwei Elektroden zeitlich synchronisiert werden. Weiters betrifft die Erfindung eine Vorrichtung zur Durchführung eines Mehrfach-Schweißverfahrens.

Metall-Schutzgas-Schweißverfahren (MSG) sind seit vielen Jahren im Stand der Technik bekannt. Dazu zählen z.B. das Metall-Inert-Gas Verfahren (MIG) oder auch das Metall-Aktiv-Gas Verfahren (MAG) bei welchen eine abschmelzende Elektrode aus einem metallischen Elektrodenwerkstoff von einem sogenannten Schutzgas umgeben wird. Metall-Schutzgas-Schweißverfahren werden in der Regel entweder dazu verwendet, auf einen Grundstoff eine Schweißnaht aufzubringen (Auftragsschweißen) oder dazu, zwei Grundstoffe zu verbinden (Verbindungsschweißen). In beiden Fällen wird mittels einer elektrischen Schweißspannung bzw. einem daraus resultierenden elektrischen Schweißstrom ein Lichtbogen zwischen der Elektrode und dem Grundstoff gezündet, welcher die Elektrode und den, die Elektrode umgebenden Bereich des Grundstoffs abschmilzt, wodurch eine stoffschlüssige Verbindung hergestellt wird. Als Elektrodenmaterial wird üblicherweise dasselbe oder ein ähnliches Material wie für den Grundstoff verwendet. Die Elektrode wird mit einer bestimmten Vorschubgeschwindigkeit der Schweißstelle zugeführt, wobei die Vorschubgeschwindigkeit fest vorgegeben werden kann, z.B. beim manuellen Schweißen per Hand oder durch Einstellung am Schweißgerät oder auch von anderen Parametern abhängig sein kann, beispielsweise von einer Schweißgeschwindigkeit, mit der die Elektrode relativ zum Grundstoff bewegt wird oder in Abhängigkeit des Stroms, etc.

Um die Schweißleistung zu erhöhen, sind auch Mehrfach-Schweißverfahren bekannt geworden, bei denen mit zumindest zwei Elektroden gleichzeitig geschweißt wird, wobei jeweils ein eigener Schweißprozess durchgeführt wird. Dazu zählt z.B. das sogenannte Tandem-Impulsschweißverfahren, bei dem zwei Impulsschweißprozesse gleichzeitig durchgeführt werden. Dabei schmelzen zumindest zwei Elektroden in Form von Schweißdrähten in ein gemeinsames oder jeweils ein eigenes Schmelzbad ab. In der Regel wird hierfür für jeden Impulsschweißprozess ein eigenes Schweißgerät verwendet, also jeweils eine Stromquelle, ein Schweißbrenner, eine Steuerungseinheit und gegebenenfalls eine Schweißdrahtvorschubeinheit. Mit jedem Schweißgerät wird ein Impulsschweißprozess realisiert, indem die jeweilige Steuerungseinheit die Schweißparameter entsprechend steuert bzw. regelt, also insbesondere den Schweißstrom, die Schweißspannung, den Drahtvorschub und ggf. auch die Schutzgasmenge. Um eine allfällige negative gegenseitige Beeinflussung der gleichzeitig ablaufenden Impuls-Schweißprozesse zu verhindern, was die Schweißqualität vermindern kann, ist auch bekannt, dass die beiden Impuls-Schweißprozesse zeitlich synchronisiert werden können. Dabei wird z.B. bei einem Schweißgerät eine Impulsfrequenz vorgegeben, der das jeweils andere Schweißgerät nachfolgt. Beide Schweißprozesse sind damit aufeinander synchronisiert und schweißen mit derselben Impulsfrequenz, sodass sich eine stabile Tropfenablöse an beiden Elektroden einstellt. Tandem-Schweißverfahren mit synchronisierten Schweißprozessen sind beispielsweise in der DE 11 2014 001 441 T5 und US 8,946,596 B2 offenbart.

Bei Einfach-Schweißverfahren, bei welchen mit nur einer abschmelzenden Elektrode geschweißt wird, ist seit einiger Zeit auch der sogenannte CMT-Mix-Schweißprozess bekannt, wie z.B. in der EP 1 677 940 B1 offenbart. Dabei wechseln sich eine Kurzschluss-Schweißphase mit relativ geringem Wärmeeintrag in den Grundstoff, in der eine reversierende Bewegung des Schweißdrahtes erfolgt, und eine Impuls-Schweißphase mit relativ dazu höherem Wärmeeintrag ab. Der Vorteil dieses Verfahrens im Vergleich zu herkömmlichen Verfahren (z.B. reines Impulsschweißen) besteht darin, dass durch die geregelte Stromzufuhr und die unterstützende Wirkung der Drahtbewegung beim Werkstoffübergang nur ein sehr niedriger Wärmeeintrag auf den Grundstoff erfolgt. Das CMT-Mix Verfahren kann daher unter anderem für Metall-Misch-Verbindungen verwendet werden, beispielsweise für die Verbindung von Stahl und Aluminium. Bisher ist allerdings kein Mehrfach-Schweißverfahren bekannt gewesen, bei dem an beiden Elektroden ein CMT-Mix-Schweißprozess durchgeführt werden kann, weil es dabei zu instabilen Schweißprozessen kommen kann.

Es ist deshalb eine Aufgabe der Erfindung, ein Mehrfach-Schweißverfahren anzugeben, das stabile Schweißprozesse an den Elektroden sowie einen gegenüber dem Mehrfach-Impulsschweißverfahren geringeren Wärmeeintrag in den Grundstoff ermöglicht.

Erfindungsgemäß wird die Aufgabe dadurch gelöst, dass an den zumindest zwei Elektroden jeweils ein Schweißprozess mit einer Kurzschluss-Schweißphase und einer Warmschweißphase mit relativ zur Kurzschluss-Schweißphase höherem Wärmeeintrag in den Grundstoff durchgeführt wird, wobei sich die Kurzschluss-Schweißphase und die Warmschweißphase periodisch abwechseln und dass zumindest die Kurzschluss-Schweißphasen der Schweißprozesse der zumindest zwei Elektroden anhand zumindest eines festgelegten ersten Synchronisationsereignisses je Kurzschluss-Schweißphase zeitlich synchronisiert werden. Dadurch stehen die an den Elektroden durchgeführten Kurzschluss-Schweißphasen des Mehrfach-Schweißverfahrens in einem definierten zeitlichen Bezug zueinander, wodurch eine gegenseitige negative Beeinflussung der Schweißprozesse vermieden werden kann.

Vorzugsweise werden die Kurzschluss-Schweißphasen dabei zeitlich synchronisiert, indem eine erste Phasenverschiebung zwischen den ersten Synchronisationsereignissen vorgesehenen wird, wobei als erstes Synchronisationsereignis beispielsweise ein Zeitpunkt einer Kurzschlussbildung in der Kurzschluss-Schweißphase oder ein Zeitpunkt, einer zur Kurzschlussbildung durchgeführten Erhöhung einer Vorschubgeschwindigkeit verwendet werden kann. Dadurch kann in einfacher Weise ein fixer zeitlicher Bezug zwischen den Kurzschluss-Schweißphasen eingestellt werden, wobei die Phasenverschiebung beispielsweise in Form eines Phasenwinkels oder einer Phasenzeit festgelegt werden kann.

In der Kurzschluss-Schweißphase wird vorzugsweise zumindest ein Kurzschlusszyklus durchgeführt, in welchem die jeweilige Elektrode in Richtung des Grundstoffs bewegt wird, bis ein Kurzschluss gebildet wird und nach Bildung des Kurschlusses in entgegengesetzte Richtung vom Grundstoff wegbewegt wird, wobei vorzugsweise ein bis zehn Kurzschlusszyklen in der Kurzschluss-Schweißphase durchgeführt werden. Durch den reversierenden Drahtvorschub kann die Tropfenablöse von der Elektrode verbessert werden. Durch die Festlegung der Anzahl der Kurzschlusszyklen kann der Wärmeeintrag in den Grundstoff variiert werden.

Vorzugsweise wird als Warmschweißphase eine Sprühlichtbogen-Schweißphase mit einem konstanten Schweißstrom verwendet oder es wird eine Impuls-Schweißphase mit mehreren, mit einer Impulsfrequenz aufeinanderfolgenden Impulszyklen durchgeführt, in denen sich jeweils eine Grundstromphase mit einem Grundstrom und ein Impulsstromphase mit einem relativ zum Grundstrom höheren Impulsstrom abwechseln. Bei Verwendung einer Impuls-Schweißphase kann somit in vorteilhafter Weise der bekannte CMT-Mix-Schweißprozess an den Elektroden des Mehrfach-Schweißverfahrens durchgeführt werden.

Es ist vorteilhaft, wenn die Impuls-Schweißphasen der Schweißprozesse der zumindest zwei Elektroden anhand zumindest eines festgelegten zweiten Synchronisationsereignisses je Impuls-Schweißphase zeitlich synchronisiert werden. Dadurch stehen auch die Impuls-Schweißphasen in einem festgelegten zeitlichen Bezug zueinander und es kann an beiden (oder mehreren) Elektroden des Mehrfach-Schweißverfahrens jeweils ein CMT-Mix-Schweißprozess durchgeführt werden, ohne dass sich die beiden (oder mehreren) Schweißprozesse gegenseitig negativ beeinflussen.

Die Impuls-Schweißphasen werden vorzugsweise zeitlich synchronisiert, indem eine zweite Phasenverschiebung zwischen den zweiten Synchronisationsereignissen vorgesehen wird, wobei als zweites Synchronisationsereignis vorzugsweise ein charakteristischer Zeitpunkt in der Impuls-Schweißphase verwendet wird, beispielsweise ein Zeitpunkt einer Änderung eines Schweißparameters oder ein Zeitpunkt einer Tropfenablöse von der Elektrode. Dadurch kann der definierte zeitliche Bezug in einfacher Weise festgelegt werden.

Die Aufgabe wird weiters mit einer eingangs genannten Vorrichtung dadurch gelöst, dass die Steuerungseinheiten dazu ausgebildet sind, jeweils einen Schweißprozess mit einer Kurzschluss-Schweißphase und einer Warmschweißphase mit relativ zur Kurzschluss-Schweißphase höherem Wärmeeintrag in den Grundstoff durchzuführen, die sich periodisch abwechseln und dass zumindest die Steuerungseinheit eines ersten Schweißgeräts dazu ausgebildet ist, zumindest eine Synchronisationsinformation über ein festgelegtes erstes Synchronisationsereignis der Kurzschluss-Schweißphase des mit dem ersten Schweißgerät durchgeführten Schweißprozesses über die Kommunikationsverbindung an die Steuerungseinheit des zumindest einen zweiten Schweißgeräts zu senden, wobei die Steuerungseinheit des zumindest einen zweiten Schweißgeräts dazu ausgebildet ist, den mit dem zweiten Schweißgerät durchgeführten Schweißprozess mittels der erhaltenen Synchronisationsinformation anhand eines festgelegten ersten Synchronisationsereignisses der Kurzschluss-Schweißphase des mit dem zweiten Schweißgerät durchgeführten Schweißprozesses zeitlich mit dem Schweißprozess des ersten Schweißgeräts zu synchronisieren.

Vorteilhafte Ausgestaltungen der Vorrichtung sind in den abhängigen Ansprüchen 10 bis 15 angegeben.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 einen Aufbau einer Vorrichtung zur Durchführung eines Mehrfach-Schweißverfahrens,
Fig.2 einen zeitlichen Verlauf von Schweißparametern des Mehrfach-Schweißverfahrens gemäß einer ersten vorteilhaften Ausführungsform der Erfindung,
Fig.3 einen zeitlichen Verlauf von Schweißparametern des Mehrfach-Schweißverfahrens gemäß einer zweiten vorteilhaften Ausführungsform der Erfindung,
Fig.4 einen zeitlichen Verlauf von Schweißparametern des Mehrfach-Schweißverfahrens gemäß einer dritten vorteilhaften Ausführungsform der Erfindung,
Fig.5 einen zeitlichen Verlauf von Schweißparametern des Mehrfach-Schweißverfahrens gemäß einer vierten vorteilhaften Ausführungsform der Erfindung,

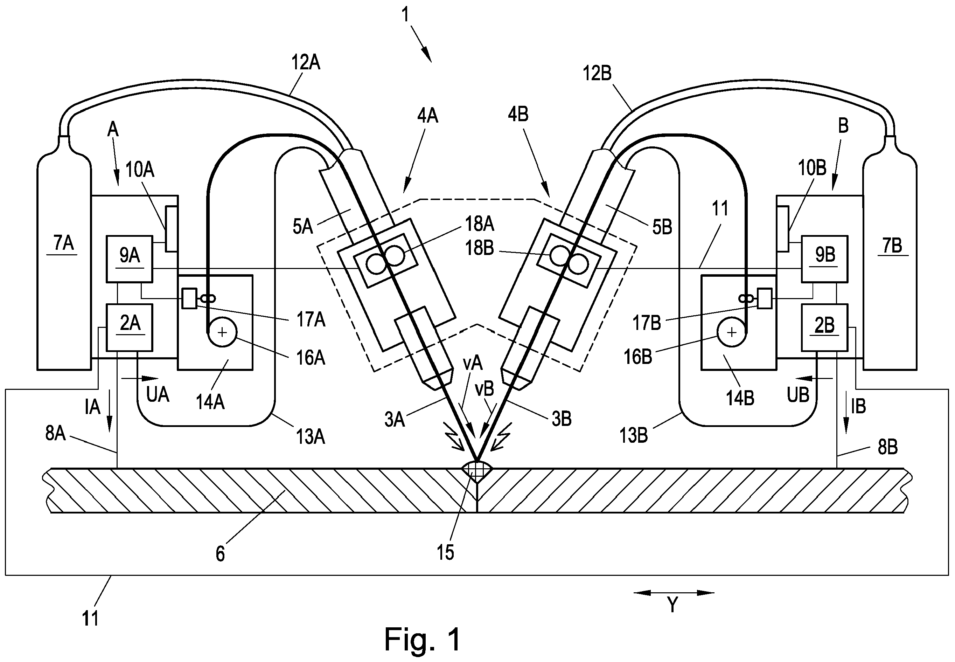

In Fig.1 ist eine Vorrichtung 1 zur Durchführung eines Mehrfach-Schweißverfahrens mit zumindest zwei abschmelzenden Elektroden 3A, 3B (z.B.: MIG/MAG-Schweißen) schematisch dargestellt. Die Vorrichtung 1 weist hier zwei voneinander unabhängige Schweißgeräte A, B auf, mit welchen jeweils ein bestimmter Schweißprozess an einem gemeinsamen Werkstück 6 aus einem metallischen Grundstoff 6 durchgeführt werden kann. Natürlich könnten auch mehr als zwei Schweißgeräte A, B vorgesehen sein, für das Verständnis der Erfindung ist die Anordnung von zwei Schweißgeräten A, B jedoch ausreichend. Die Schweißgeräte A, B müssen auch nicht zwingend als separate Einheiten ausgeführt sein, sondern es wäre auch denkbar, dass die zwei (oder mehrere) Schweißgeräte A, B beispielsweise in einem gemeinsamen Gehäuse angeordnet sind. Das ändert aber nichts daran, dass jedes Schweißgerät A, B für sich einen eigenen Schweißstromkreis zur Durchführung des jeweiligen Schweißprozesses ausbildet.

Die Schweißgeräte A, B können bekanntermaßen jeweils eine Schweißstromquelle 2A, 2B, eine Schweißdrahtvorschubeinheit 14A, 14B und einen Schweißbrenner 4A, 4B aufweisen (MIG/MAG-Schweißgeräte). Die Schweißstromquellen 2A, 2B stellen jeweils die benötigte Schweißspannung UA, UB zur Verfügung, die jeweils an einen Schweißdraht als abschmelzende Elektrode 3A, 3B angelegt wird. Der Schweißdraht wird dem jeweiligen Schweißbrenner 4A, 4B mittels der Schweißdrahtvorschubeinheit 14A, 14B mit einer bestimmten durch den jeweiligen Schweißprozess vorgegebenen Vorschubgeschwindigkeit vA, vB zugeführt. Die Zuführung kann beispielsweise innerhalb eines Schlauchpakets 5A, 5B oder auch außerhalb davon erfolgen. Die Schweißdrahtvorschubeinheit 14A, 14B kann jeweils im Schweißgerät A, B integriert sein, kann aber auch eine separate Einheit sein, so wie in Fig.1 dargestellt. Innerhalb der Schweißdrahtvorschubeinheit 14A, 14B kann beispielsweise eine Drahtrolle 16A, 16B vorgesehen sein, auf der der Schweißdraht aufgewickelt ist. Der Schweißdraht könnte aber beispielsweise auch in einem Behälter wie z.B. einem Fass angeordnet sein und von dort dem Schweißbrenner 4A, 4B zugeführt werden. Weiters kann eine geeignete Antriebseinheit 17A, 17B vorgesehen sein, die von der Steuereinheit 9A, 9B angesteuert wird, um den Schweißdraht von der Drahtrolle 16A, 16B oder aus dem Behälter abzuwickeln und dem Schweißbrenner 4A, 4B mit einer Vorschubgeschwindigkeit vA, vB zuzuführen.

Zusätzlich kann auch im Schweißbrenner 4A, 4B eine geeignete Antriebseinheit 18A, 18B zur Erzeugung einer Vorschubgeschwindigkeit vA, vB vorgesehen sein, die ebenfalls von der entsprechenden Steuereinheit 9A, 9B angesteuert werden kann. Allgemein können die Antriebseinheiten 17A, 17B; 18A, 18B beispielsweise als angetriebene Rollenpaare ausgebildet sein, zwischen denen der Schweißdraht gefördert wird. Wenn das Schweißgerät A, B lediglich eine Antriebseinheit 17A, 17B außerhalb des Schweißbrenners aufweist, spricht man auch von einem sogenannten "Push-System". Dabei wird der Schweißdraht im Wesentlichen in Richtung des Schweißbrenners 4A, 4B gedrückt. Wenn zusätzlich auch die dargestellte Antriebseinheit 18A, 18B im Schweißbrenner 4A, 4B vorgesehen ist, spricht man auch von einem sogenannten "Push-Pull-System". Dabei kann der Schweißdraht sowohl von der Antriebseinheit 17A, 17B in Richtung des Schweißbrenners 4A, 4B gedrückt werden, als auch von der Antriebseinheit 18A, 18B in Richtung des Schweißbrenners 4A, 4B gezogen werden.

"Push-Pull-System" werden insbesondere bei Schweißprozessen verwendet, bei denen sich die Vorschubgeschwindigkeit vA, vB und ggf. auch die Vorschubrichtung relativ rasch ändern können, wie beispielsweise beim CMT-Schweißprozess. Ggf. kann bei "Push-Pull-Systemen" auch ein geeigneter Draht-Puffer, beispielsweise in Form einer bekannten Draht-Speichereinheit, vorgesehen sein. Der Draht-Puffer kann zwischen der außerhalb des Schweißbrenners 4A, 4B liegenden (Push-)Antriebseinheit 17A, 17B und der im Schweißbrenner 4A, 4B vorgesehenen (Pull-)Antriebseinheit 18A, 18B angeordnet sein.

Zur Durchführung eines Schweißprozesses wird jeweils ein Lichtbogen zwischen der Elektrode 3A, 3B bzw. dem Schweißdraht und dem Grundstoff 6 (=Werkstück) gezündet, wie hier durch die Blitze symbolisiert ist. Durch den Lichtbogen wird einerseits das Material des Grundstoffes 6 lokal aufgeschmolzen und ein sogenanntes Schmelzbad 15 erzeugt. Andererseits wird der Schweißdraht mittels einer bestimmten Vorschubgeschwindigkeit vA, vB dem Schmelzbad 15 zugeführt und vom Lichtbogen abgeschmolzen, um das Material der abschmelzenden Elektroden 3A, 3B auf das Werkstück 6 aufzutragen. Bei Bewegung der Schweißbrenner 4A, 4B relativ zum Werkstück 6 kann dadurch eine Schweißnaht ausgebildet werden (in Fig.1 in Richtung normal auf die Zeichenebene).

Im jeweiligen Schlauchpaket 5A, 5B können gegebenenfalls auch weitere Leitungen zwischen dem Schweißgerät A, B und dem jeweiligen Schweißbrenner 4A, 4B (beispielsweise eine nicht dargestellte Steuerleitung oder eine Kühlmittelleitung) vorgesehen sein. Es kann auch ein Schutzgas verwendet werden, um das Schmelzbad 15 vor der Umgebungsluft, insbesondere dem darin enthaltenen Sauerstoff abzuschirmen, um eine Oxidation zu vermeiden. Dabei kommen in der Regel inerte Gase (z.B. Argon), aktive Gase (z.B. CO₂) oder Gemische davon zum Einsatz, welche dem Schweißbrenner 4A, 4B ebenfalls über das Schlauchpaket 5A, 5B mittels geeigneter Schutzgasleitungen 12A, 12B zugeführt werden können. Die Schutzgase sind üblicherweise in separaten (Druck- )Behältern 7A, 7B gelagert, welche z.B. über geeignete Leitungen den Schweißgeräten A, B (oder direkt dem Schweißbrenner 4A, 4B) zugeführt werden können. Bei Verwendung des gleichen Schutzgases könnte auch ein gemeinsamer Behälter für beide (alle) Schweißgeräte A, B vorgesehen sein. Das Schlauchpaket 5A, 5B kann an den Schweißbrenner 4A, 4B und am Schweißgerät A, B z.B. über geeignete Kupplungen angekoppelt werden.

Um jeweils einen Schweißstromkreis der Schweißgeräte A, B auszubilden, können die Schweißstromquellen 2A, 2B jeweils mit einer Masseleitung 8A, 8B mit dem Grundstoff 6 verbunden werden. Ein Pol der Schweißstromquelle 2A, 2B, üblicherweise der Minuspol, ist mit der Masseleitung 8A, 8B verbunden. Der andere Pol der Schweißstromquelle 2A, 2B, üblicherweise der Pluspol, ist über eine geeignete Stromleitung 13A, 13B mit der Schweißelektrode 4A, 4B verbunden (oder umgekehrt). Damit bildet sich für jeden Schweißprozess über den Lichtbogen und den Grundstoff 6 ein Schweißstromkreis aus.

In den Schweißgeräten A, B kann auch jeweils eine Steuereinheit 9A, 9B vorgesehen sein, die den jeweiligen Schweißprozess inkl. des jeweiligen Schweißdrahtvorschubs steuert und überwacht. Hierfür sind in der Steuereinheit 9A, 9B für den Schweißprozess benötigte Schweißparameter, wie beispielsweise die Vorschubgeschwindigkeit vA, vB, der Schweißstrom IA, IB, die Schweißspannung UA, UB, die Impulsfrequenz fA, fB, etc. vorgegeben oder einstellbar. Zum Steuern des jeweiligen Schweißprozesses ist die Steuereinheit 9A, 9B mit der Schweißstromquelle 2A, 2B und der Schweißdrahtvorschubeinheit 14A, 14B (z.B. insbesondere der Antriebseinheit 17A, 17B) verbunden. Zur Eingabe oder zur Anzeige gewisser Schweißparameter oder eines Schweißstatus kann auch eine mit der Steuereinheit 9A, 9B verbundene Benutzerschnittstelle 10A, 10B vorgesehen sein.

Weiters könnte auch eine geeignete (nicht dargestellte) Schnittstelle am Schweißgerät A, B vorgesehen sein, über welche das Schweißgerät A, B mit einer übergeordneten Steuereinheit verbunden werden kann, über das gesamte Mehrfach-Schweißverfahren gesteuert werden kann. Beispielsweise könnte eine (nicht dargestellte) zentrale Steuereinheit vorgesehen sein, welche mit beiden Schweißgeräten A, B (oder mehreren Schweißgeräten) verbunden ist und über welche die Schweißprozesse der Schweißgeräte A, B gesteuert werden können. Die beschriebenen Schweißgeräte A, B sind natürlich hinlänglich bekannt, weshalb an dieser Stelle nicht mehr näher darauf eingegangen wird.

Die beiden Schweißbrenner 4A, 4B können örtlich relativ zueinander auch so angeordnet werden, dass die Elektroden bzw. Schweißdrähte 3A, 3B in zwei getrennte Schmelzbäder arbeiten anstatt in ein gemeinsames Schmelzbad 15 am Werkstück 6, wie in Fig.1 dargestellt. Diese Anordnung zueinander kann fix sein, beispielsweise in dem beide Schweißbrenner 4A, 4B an einem (nicht dargestellten) Schweißroboter angeordnet werden, der beide Schweißbrenner 4A, 4B führt. Die Anordnung kann aber auch veränderlich sein, beispielsweise in dem je ein Schweißbrenner 4A, 4B von einem Schweißroboter geführt wird. Anstatt eines Schweißroboters kann natürlich auch eine andere geeignete Manipulationsvorrichtung vorgesehen sein, beispielsweise eine Art Portalkran, der vorzugsweise eine Bewegung in mehreren, vorzugsweise drei Achsen ermöglicht. Es könnte aber auch ein gemeinsamer Schweißbrenner für beide Elektroden 3A, 3B vorgesehen sein, wie in Fig.1 gestrichelt angedeutet ist. Es ist dabei unerheblich, ob mit den Schweißbrennern 4A, 4B ein Verbindungsschweißen oder ein Auftragsschweißen, oder ein sonstiges Schweißverfahren, realisiert wird. Natürlich wäre grundsätzlich auch eine manuelle Durchführung des Mehrfach-Schweißverfahrens möglich, beispielsweise indem der oder die Schweißbrenner 4A, 4B per Hand geführt werden.

Die Steuerungseinheiten 9A, 9B der Schweißgeräte A, B können mittels einer Kommunikationsverbindung 11 verbunden sein, über die eine Synchronisationsinformation Y gesendet und/oder empfangen werden kann, mittels der die beiden Schweißprozesse zeitlich synchronisiert werden können. Vorzugsweise sind die Schweißgeräte A, B so ausgebildet, dass die Synchronisationsinformation Y wechselseitig zwischen den Steuerungseinheiten 9A, 9B ausgetauscht werden kann, wie in Fig.1 durch den Doppelpfeil angedeutet ist. Dadurch können beide Schweißgeräte A, B sowohl als "Lead" als auch als "Trail" verwendet werden. Das "Lead"-Schweißgerät A oder B kann eine Synchronisationsinformation Y senden und das "Trail"-Schweißgerät A oder B kann die Synchronisationsinformation Y verwenden, um den mit dem "Trail"-Schweißgerät A oder B durchgeführten Schweißprozess zeitlich auf den Schweißprozess des "Lead"-Schweißgeräts A oder B zu synchronisieren. Die Kommunikationsverbindung 11 kann beispielsweise eine drahtgebundene oder drahtlose Verbindung zwischen den Steuereinheiten 9A, 9B oder zwischen den Benutzerschnittstellen 10A, 10B sein, z.B. ein hinlänglich bekannter Datenbus.

Im einfachsten Fall kann die Synchronisationsinformation Y z.B. ein einzelner Synchronisationspuls sein, der von einem sendenden Schweißgerät A oder B über die Kommunikationsverbindung 11 an das jeweils zumindest eine andere (empfangende) Schweißgerät A oder B gesendet wird. Der Synchronisationspuls kann dabei z.B. als Strom- oder Spannungspuls auf einer drahtgebundenen Kommunikationsverbindung 11 zwischen den beiden Schweißgeräten A, B gesendet werden. Es ist aber auch möglich die Kommunikationsverbindung 11 als Datenbus auszuführen, auf dem Busnachrichten versendet werden. In diesem Fall kann der Synchronisationspuls als Busnachricht gesendet werden, was sowohl drahtgebunden (Kabel, Glasfaser, etc.), als auch drahtlos (Wifi, Bluetooth, etc.) realisiert werden kann. Im empfangenden Schweißgerät A oder B kann der jeweils durchgeführte Schweißprozess mittels des empfangenen Synchronisationspulses mit dem Schweißprozess des sendenden Schweißgeräts A oder B synchronisiert werden.

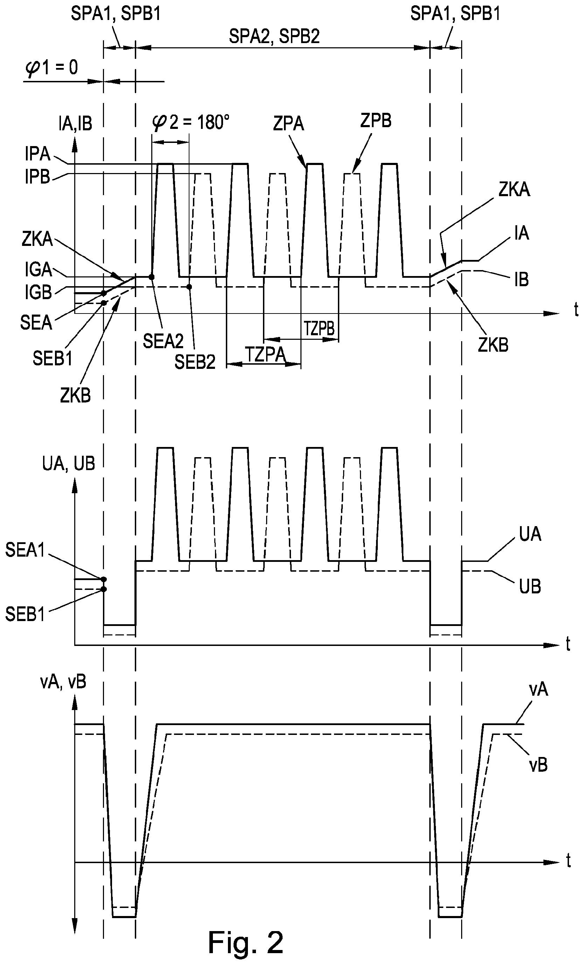

Gemäß der Erfindung ist vorgesehen, dass die Steuerungseinheiten 9A, 9B dazu ausgebildet sind, jeweils einen Schweißprozess mit einer Kurzschluss-Schweißphase SPA1, SPB1 und einer Warmschweißphase SPA2, SPB2 mit relativ zur Kurzschluss-Schweißphase höherem Wärmeeintrag in den Grundstoff 6 durchzuführen, die sich periodisch abwechseln (siehe Fig.2-Fig.5). Weiters ist vorgesehen, dass zumindest die Steuerungseinheit 9A eines ersten Schweißgeräts A dazu ausgebildet ist, eine Synchronisationsinformation Y über ein festgelegtes erstes Synchronisationsereignis SEA1 der Kurzschluss-Schweißphase SPA1 des mit dem ersten Schweißgerät A durchgeführten Schweißprozesses (Fig.2-Fig.5) über die Kommunikationsverbindung 11 an die Steuerungseinheit 9B des zumindest einen zweiten Schweißgeräts B zu senden. Die Steuerungseinheit 9B des zumindest einen zweiten Schweißgeräts B ist dazu ausgebildet, den mit dem zweiten Schweißgerät B durchgeführten Schweißprozess mittels der erhaltenen Synchronisationsinformation Y anhand eines festgelegten ersten Synchronisationsereignisses SEB1 der Kurzschluss-Schweißphase SPB1 des mit dem zweiten Schweißgerät B durchgeführten Schweißprozesses (Fig.2-Fig.5) zeitlich mit dem Schweißprozess des ersten Schweißgeräts A zu synchronisieren. Das erste Schweißgerät A fungiert somit als "Lead"-Schweißgerät und das zweite Schweißgerät B als "Trail"-Schweißgerät.

Als erste Synchronisationsereignisse SEA1, SEB1 können beispielsweise charakteristische Zeitpunkte in der Kurzschluss-Schweißphase SPA1, SPB1 im jeweils durchgeführten Schweißprozess verwendet werden, die bekannt oder möglichst einfach detektierbar sind. Beispielsweise kann eine rasche Änderung, z.B. eine ansteigende oder abfallende Flanke im zeitlichen Verlauf, eines Schweißparameters, wie z.B. des Schweißstroms I, der Schweißspannung U oder der Vorschubgeschwindigkeit v als erstes Synchronisationsereignis SEA1, SEB1 verwendet werden. Die Synchronisationsinformation Y kann dabei beispielsweise eine erste Phasenverschiebung ϕ1 zwischen dem ersten Synchronisationsereignis SEA1 im Schweißprozess des ersten Schweißgeräts A und dem ersten Synchronisationsereignis SEB1 im Schweißprozess des zweiten Schweißgeräts B enthalten. Als Phasenverschiebung ϕ kann dabei beispielsweise ein Winkel von 0-360° bezogen auf periodisch wiederkehrenden Schweißzyklen oder auch eine Zeit verwendet werden, wie später anhand der Fig.2-5 noch näher erläutert wird.

Die Kurzschluss-Schweißphase SPA1, SPB1 zeichnet sich bekanntermaßen dadurch aus, dass es zu einer Kurschlussbildung kommt, wenn die jeweilige Elektrode 3A, 3B den Grundstoff 6 berührt. Dieser für die Kurzschluss-Schweißphase SPA1, SPB1 charakteristische Zeitpunkt der Kurzschlussbildung kann daher in vorteilhafter Weise als erstes Synchronisationsereignis SEA1, SEB1 der Kurzschluss-Schweißphase SPA1, SPB1 vorgesehen sein. Der Zeitpunkt der Kurzschluss-Bildung kann beispielsweise anhand des Verlaufs des Schweißstroms I oder der Schweißspannung U ermittelt werden, wie nachfolgend anhand Fig.2-Fig.5 noch näher erläutert wird. Anstelle des Zeitpunktes der tatsächlichen Kurzschlussbildung kann als erstes Synchronisationsereignis SEA1, SEB1 aber beispielsweise auch ein bekannter Zeitpunkt einer Erhöhung der Vorschubgeschwindigkeit v verwendet werden, die bewusst durchgeführt wird, um die Kurzschlussbildung, im Wesentlichen gezwungen, auszulösen. Alternativ könnte auch ein bekannter Zeitpunkt einer Reduktion des Schweißstroms IA, IB als erstes Synchronisationsereignis SEA1, SEB1 verwendet werden, die bewusst durchgeführt wird, um die Kurzschlussbildung, im Wesentlichen gezwungen, auszulösen. Durch die bewusste Reduktion des Schweißstroms IA, IB kann die Lichtbogenenergie des Lichtbogens reduziert werden, sodass ein Kurzschluss gebildet wird. Die genannte Erhöhung der Vorschubgeschwindigkeit v und die genannte Reduktion des Schweißstroms IA, IB könnten beispielsweise zeitversetzt erfolgen, wobei entweder der Zeitpunkt der Erhöhung der Vorschubgeschwindigkeit v oder Zeitpunkt der Reduktion des Schweißstroms IA, IB als erstes Synchronisationsereignis SEA1, SEB1 herangezogen werden kann. Die Erhöhung der Vorschubgeschwindigkeit v und die Reduktion des Schweißstroms IA, IB könnten aber auch zeitgleich erfolgen, sodass der gemeinsame Zeitpunkt als erstes Synchronisationsereignis SEA1, SEB1 verwendet werden kann.

Um die Tropfenablöse in der Kurzschluss-Schweißphase SPA1, SPB1 zu verbessern, kann es vorteilhaft sein, wenn in der Kurzschluss-Schweißphase SPA1, SPB1 zumindest ein Kurzschlusszyklus ZKA, ZKB durchgeführt wird, in welchem die Elektrode 3A, 3B in Richtung des Grundstoffs 6 bewegt, bis sich ein Kurzschluss bildet und nach Bildung des Kurschlusses in entgegengesetzte Richtung vom Grundstoff 6 wegbewegt wird. Die Bewegung kann in bekannter Weise erfolgen, indem die jeweilige Schweißdrahtvorschubeinheit 14A, 14B von der jeweiligen Steuerungseinheit 9A, 9B angesteuert wird. Die Dauer der Kurzschluss-Schweißphase SPA1, SPB1 (mit relativ zur Warmschweißphase geringerem Wärmeeintrag in den Grundstoff 6) kann dabei flexibel festgelegt werden, beispielsweise indem eine bestimmte Anzahl von Kurzschlusszyklen ZKA, ZKB vorgegeben wird, beispielsweise zwei bis zehn Kurzschlusszyklen ZKA, ZKB je Kurzschluss-Schweißphase SPA1, SPB1. Dabei erfolgt vorzugsweise in jedem Kurzschlusszyklus ZKA, ZKB ein reversierender Drahtvorschub, also eine Bewegung in Richtung des Grundstoffs 6 bis zur Bildung eines Kurzschlusses und eine Bewegung vom Grundstoff 6 weg nach der Bildung des Kurzschlusses. Natürlich ist ein reversierender Drahtvorschub, also eine Umkehrung der Richtung der Vorschubgeschwindigkeit vA, vB nur optional. Eine Kurzschluss-Schweißphase SPA1, SPB1 könnte beispielsweise auch lediglich mit veränderlicher Vorschubgeschwindigkeit v durchgeführt werden, ohne dass sich die Bewegungsrichtung des Schweißdrahts ändert.

Als Warmschweißphase SPA2, SPB2 kann beispielsweise eine bekannte Impuls-Schweißphase (Fig.2-Fig.5) verwendet werden. Dadurch kann mit den zwei Schweißgeräten A, B parallel jeweils der eingangs genannte CMT-Mix-Schweißprozess durchgeführt werden, bei dem sich jeweils eine Kurzschluss-Schweißphase SPA1, SPB1 und eine Impuls-Schweißphase SPA2, SPB2 periodisch abwechseln. In der Impuls-Schweißphase werden dabei in der Regel mehrere, mit einer bestimmten Impulsfrequenz fA, fB aufeinanderfolgende Impulszyklen ZPA, ZPB durchgeführt, in denen sich jeweils eine Grundstromphase mit einem Grundstrom IGA, IGB und ein Impulsstromphase mit einem relativ zum Grundstrom IGA, IGB höheren Impulsstrom IPA, IPB abwechseln. Als Warmschweißphase SPA2, SPB2 kann aber beispielsweise auch eine bekannte (nicht dargestellte) Sprühlichtbogen-Schweißphase mit einem im Wesentlichen konstanten Schweißstrom IA, IB verwendet werden.

Vorzugsweise wird an beiden Elektroden 3A, 3B parallel der gleiche Schweißprozess durchgeführt, indem die Steuerungseinheiten 9A, 9B beider Schweißgeräte A, B identische vorgegebene oder vorgebbare Schweißparameter (U, I, v), f, etc.) einstellt. Wenn beispielsweise mit beiden Schweißgeräten A, B als Warmscheißphase SPA2, SPB2 eine Impuls-Schweißphase durchgeführt wird, ist es vorteilhaft, dass in beiden Impuls-Schweißphasen die gleiche Impulsfrequenz fA, fB verwendet wird. Die Impulsfrequenz fA, fB in der Impuls-Schweißphase eines Schweißgeräts A, B könnte aber auch ein ganzzahliges Vielfaches der Impulsfrequenz fA, fB der Impuls-Schweißphase des jeweils anderen Schweißgeräts A, B betragen.

Wenn als Warmschweißphase SPA2, SPB2 jeweils eine Impuls-Schweißphase vorgesehen ist (CMT-Mix-Schweißprozess), ist es vorteilhaft, wenn die mit den zumindest zwei Schweißgeräten A, B an den zumindest zwei Elektroden 3A, 3B durchgeführten Schweißprozesse anhand zumindest eines festgelegten zweiten Synchronisationsereignisses SEA2, SEB2 je Impuls-Schweißphase zeitlich synchronisiert werden. Dadurch ist es möglich, dass die zumindest zwei parallel durchgeführten (CMT-Mix) Schweißprozesse zeitlich so synchronisiert werden können, dass sowohl die beiden Kurzschluss-Schweißphasen, als auch die beiden Impuls-Schweißphasen in einem festgelegten zeitlichen Bezug zueinander stehen, wie nachfolgend anhand Fig.2-Fig.5 noch im Detail erläutert wird.

Die Impuls-Schweißphasen SPA2, SPB2 können analog wie die Kurzschluss-Schweißphasen beispielsweise zeitlich synchronisiert werden, indem eine zweite Phasenverschiebung ϕ2 zwischen den festgelegten zweiten Synchronisationsereignissen SEA2, SEB2 vorgesehenen wird, beispielsweise in Form eines Phasenwinkels oder einer Zeit. Als zweites Synchronisationsereignis SEA2, SEB2 kann wiederum ein charakteristischer Zeitpunkt in der Impuls-Schweißphase SPA2, SPB2 verwendet werden, beispielsweise ein Zeitpunkt einer Tropfenablöse von der jeweiligen Elektrode 3A, 3B oder ein Zeitpunkt einer raschen Änderung eines Schweißparameters, z.B. eine ansteigende oder abfallende Flanke im zeitlichen Verlauf z.B. des Schweißstroms I, der Schweißspannung U oder der Vorschubgeschwindigkeit v.

Durch die zeitliche Synchronisierung der beiden (vorzugsweise CMT-Mix) Schweißprozesse gemäß der Erfindung ist es nunmehr möglich, dass die (zumindest) zwei Schweißprozesse stabil und mit möglichst geringer gegenseitiger Beeinflussung durchgeführt werden können, weil diese in einem festgelegten zeitlichen Verhältnis zueinander ablaufen. Die jeweiligen Zeitpunkte der Kurzschlussbildung (oder Zeitpunkte der zum Auslösen des Kurzschlusses vorgesehenen Erhöhungen der Vorschubgeschwindigkeit oder Zeitpunkte der zum Auslösen des Kurzschlusses vorgesehenen Reduktion des Schweißstroms) und/oder Zeitpunkte der Tropfenablöse können z.B. von der jeweiligen Steuerungseinheit 9A, 9B detektiert werden oder können auch bekannt sein, beispielsweise wenn voreingestellte Schweißprozesse mit bekannten Schweißparametern (bekannter zeitlicher Verlauf des Schweißstroms I, der Schweißspannung U, der Vorschubgeschwindigkeit v, usw.) verwendet werden.

Beispielsweise kann die Steuerungseinheit 9A des ersten Schweißgeräts A einen ersten Schweißprozess durchführen, indem bestimmte Schweißparameter, wie z.B. ein bestimmter Schweißstrom IA, eine Schweißspannung UA und eine bestimmte Vorschubgeschwindigkeit vA durch die Steuerungseinheit 9A eingestellt werden (z.B. ein vorgegebener CMT-Mix-Schweißprozess mit einer Kurzschluss-Schweißphase SPA1 und mit einer Impuls-Schweißphase als Warmschweißphase SPA2). In analoger Weise kann die Steuerungseinheit 9B des zweiten Schweißgeräts B einen zweiten Schweißprozess durchführen, indem bestimmte Schweißparameter, wie z.B. ein bestimmter Schweißstrom IB, eine Schweißspannung UB und eine bestimmter Vorschubgeschwindigkeit vB durch die Steuerungseinheit 9B eingestellt werden (z.B. wiederum ein CMT-Mix-Schweißprozess mit einer Kurzschluss-Schweißphase und mit einer Impuls-Schweißphase als Warmschweißphase SPB2).

Die Steuerungseinheit 9A des ersten Schweißgeräts A ("Lead") kann dabei eine Synchronisationsinformation Y über zumindest ein erstes Synchronisationsereignis SEA1 der Kurzschluss-Schweißphase SPA1 des ersten Schweißprozesses (z.B. Zeitpunkt einer Kurzschlussbildung) und (optional) eine Information über zumindest ein zweites Synchronisationsereignis SEA2 der Impuls-Schweißphase SPA2 des ersten Schweißprozesses (z.B. Zeitpunkt einer Tropfenablöse von der Elektrode 3A) über die Kommunikationsverbindung 11 an die Steuerungseinheit 9B des zweiten Schweißgeräts B senden, beispielsweise als Synchronisationspuls oder als Bus-Nachricht. Die Steuerungseinheit 9B des zweiten Schweißgeräts B ("Trail") kann die erhaltene Synchronisationsinformation Y dazu verwenden, um den durchgeführten zweiten (CMT-Mix-) Schweißprozess zeitlich mit dem ersten (CMT-Mix-) Schweißprozess des ersten Schweißgeräts A zu synchronisieren. Insbesondere kann die Steuerungseinheit 9B des zweiten Schweißgeräts B mittels der Synchronisationsinformation Y die Kurzschluss-Schweißphase SPB1 anhand eines ersten Synchronisationsereignisses SEB1 (z.B. Zeitpunkt einer Kurzschlussbildung) zeitlich mit der Kurzschluss-Schweißphase SPA1 des ersten Schweißgeräts A synchronisieren. Zusätzlich kann die Steuerungseinheit 9B des zweiten Schweißgeräts B ggf. mittels der Synchronisationsinformation Y die Impuls-Schweißphase SPB2 anhand eines zweiten Synchronisationsereignisses SEB2 (z.B. Zeitpunkt einer Tropfenablöse von der Elektrode 3B) zeitlich mit der Impuls-Schweißphase SPA2 des ersten Schweißgeräts A synchronisieren.

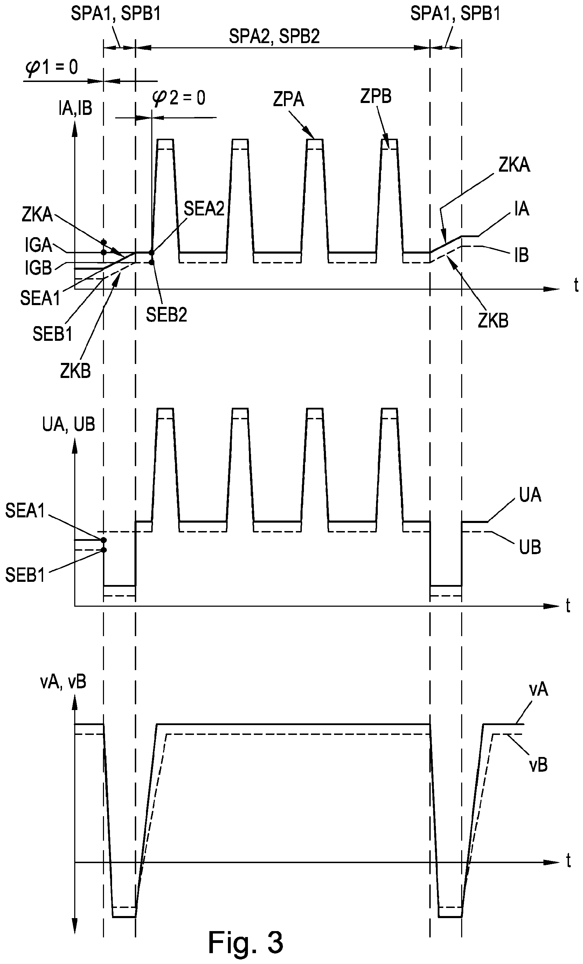

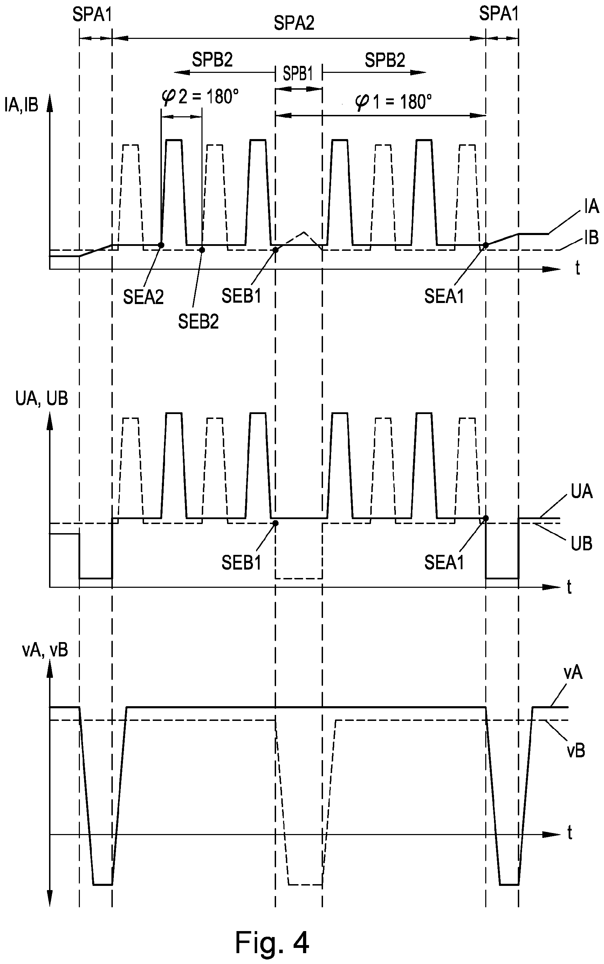

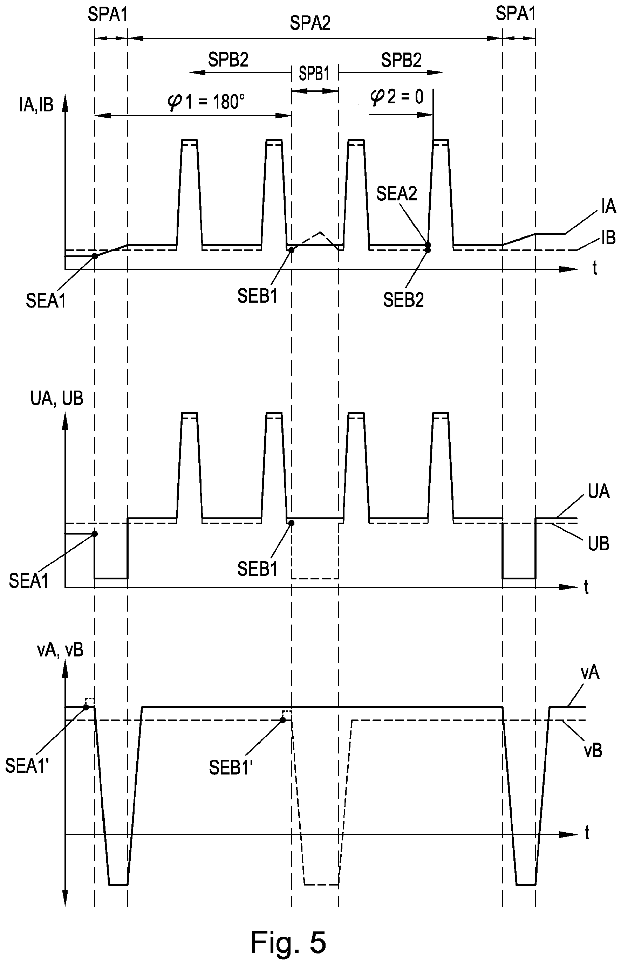

Beispielsweise könnte die Synchronisationsinformation Y eine bestimmte erste Phasenverschiebung ϕ1 enthalten, mit der die Kurzschluss-Schweißphasen SPA1, SPB1 zeitlich versetzt zueinander durchgeführt werden. Die erste Phasenverschiebung ϕ1 kann vorgegeben sein, könnte aber auch einstellbar sein (z.B. über die Benutzerschnittstelle 10A und/oder 10B). In analoger Weise könnte die Synchronisationsinformation Y eine bestimmte zweite Phasenverschiebung ϕ2 enthalten, mit der die Impuls-Schweißphasen SPA2, SPB2 zeitlich versetzt zueinander durchgeführt werden. Denkbar wäre z.B., dass die Kurzschluss-Schweißphasen SPA1, SPB1 synchron durchgeführt werden, also mit einer ersten Phasenverschiebung ϕ1=0, und dass auch die Impuls-Schweißphasen SPA2, SPB2 synchron durchgeführt werden, also mit einer zweiten Phasenverschiebung ϕ2=0, wie in Fig.3 dargestellt ist. Es könnte aber natürlich eine andere zeitliche Synchronisierung gewählt werden, beispielsweise ϕ1=0, ϕ2≠0 (Fig.2); ϕ1≠0, ϕ2=0 (Fig.5); ϕ1=ϕ2≠0 (Fig.4) mit ϕ1<ϕ2, ϕ1 > ϕ2 oder ϕ1 = ϕ2.

Anhand Fig.2 bis Fig.5 werden nachfolgend vorteilhafte Ausgestaltungen der erfindungsgemäßen Synchronisierung beschrieben. Dabei sind für die parallel durchgeführten Schweißprozesse an den (hier zwei) Elektroden 3A, 3B jeweils Verläufe des Schweißstroms IA, IB, der Schweißspannung UA, UB und der Vorschubgeschwindigkeit vA, vB über der Zeit t übereinander dargestellt. Die durchgezogene Linie bezieht sich dabei auf den beispielsweise mit dem ersten Schweißgerät A an der ersten Elektrode 3A durchgeführten ersten Schweißprozess und die gestrichelte Linie auf den mit dem zweiten Schweißgerät B an der zweiten Elektrode 3B durchgeführten zweiten Schweißprozess des Mehrfach-Schweißverfahrens. Beispielhaft sind hier zwei CMT-Mix-Schweißprozesse als erster und zweiter Schweißprozess dargestellt, bei denen sich jeweils eine Kurzschluss-Schweißphase SPA1, SPB1 und eine Impuls-Schweißphase Warmschweißphase SPA2, SPB2 periodisch abwechseln. Der CMT-Mix-Schweißprozess ist grundsätzlich beim Einfach-Schweißverfahren mit einer Elektrode bekannt, weshalb hier nur auf die für die Erfindung wesentlichen Aspekte näher eingegangen wird. Wie erwähnt, könnte als Warmschweißphase anstatt der Impuls-Schweißphase aber auch eine Sprühlichtbogen-Schweißphase mit einem im Wesentlichen konstanten Schweißstrom IA, IB verwendet werden. In diesem Fall wäre eine Synchronisierung der Kurzschluss-Schweißphasen SPA1, SPB1 ausreichend.

Bekanntermaßen können in der Impuls-Schweißphase SPA2, SPB2 mehrere, mit einer vorgegebenen oder einstellbaren Impulsfrequenz fPA, fPB aufeinanderfolgende Impulszyklen ZPA, ZPB durchgeführt werden. Die Impulsfrequenz fPA, fPB entspricht dabei dem Kehrwert der Periodendauer TZPA, TZPB der Impulszyklus ZPA, ZPB, wie in Fig.2 beispielhaft anhand jeweils eines Impulszyklus ZPA, ZPB der zweiten (Impuls-)Schweißphasen SPA2, SPB2 dargestellt ist. In jedem Impulszyklus ZPA, ZPB wechseln sich üblicherweise eine Grundstromphase mit einem Grundstrom IGA, IGB und ein Impulsstromphase mit einem relativ zum Grundstrom IGA, IGB höheren Impulsstrom IPA, IPB ab. Durch die Erzeugung eines solchen Stromimpulses je Impulszyklus ZPA, ZPB erfolgt eine gezielte Tropfenablöse von der jeweiligen Elektrode 3A, 3B. Der Zeitpunkt dieser Tropfenablöse kann beispielsweise für die Impuls-Schweißphase SPA2, SPB2 als charakteristisches zweites Synchronisationsereignis SEA2, SEB2 im Sinne der Erfindung verwendet werden, um die beiden Impuls-Schweißphasen SPA2, SPB2 zeitlich miteinander zu synchronisieren, wie nachfolgend noch näher erläutert wird.

Die Impulsfrequenzen fPA, fPB, Grundströme IGA, IGB und Impulsströme IPA, IPB können dabei gleich groß gewählt werden, können sich aber auch unterscheiden. Der im jeweils mittleren Diagramm dargestellte zeitliche Verlauf der Schweißspannung UA, UB entspricht qualitativ im Wesentlichen dem Verlauf des Schweißstroms IA, IB, weshalb hier nicht näher darauf eingegangen wird. Allgemein ergibt sich die Spannung U während des Schweißprozesses aus dem Spannungsabfall am Lichtbogen und dem Spannungsabfall am freien Drahtende des Schweißdrahts. Die Vorschubgeschwindigkeit vA, vB der Elektroden 3A, 3B ist während der Impuls-Schweißphase SPA2, SPB2 im Wesentlichen konstant, wie im unteren Diagramm ersichtlich ist und ändert sich jeweils beim Übergang von bzw. in die jeweilige Kurzschluss-Schweißphase SPA1, SPB1. Natürlich wäre aber auch eine nichtkonstante Vorschubgeschwindigkeit vA, vB in der Impuls-Schweißphase SPA2, SPB2 denkbar. Die Dauer der gesamten Impuls-Schweißphase SPA2, SPB2 (die sich aus der Anzahl von Impulszyklen ZPA, ZPB und deren Periodendauer TZPA, TZPB ergibt) kann beispielsweise durch Vorgabe einer Zeit eingestellt werden oder durch Vorgabe der Anzahl der Impulszyklen ZPA, ZPB und deren Periodendauer TZPA, TZPB.

In den in Fig.2-Fig.5 dargestellten Beispielen sind der Schweißstrom IB, die Schweißspannung UB und die Vorschubgeschwindigkeit vB der zweiten Elektrode 3B betragsmäßig etwas geringer als der Schweißstrom IA, die Schweißspannung UA und die Vorschubgeschwindigkeit vA der ersten Elektrode 3B. Dies ist darauf zurückzuführen, dass hier die erste Elektrode 3A als Führungselektrode festgelegt ist und die zweite Elektrode 3B als Nachlaufelektrode festgelegt ist. Die Führungselektrode eilt der Nachlaufelektrode in Schweißrichtung (=Bewegungsrichtung der Schweißbrenner 4A, 4B zur Erzeugung der Schweißnaht) voraus. Das bedeutet, dass die Nachlaufelektrode in das bereits von der Führungselektrode erzeugte Schmelzbad arbeitet, weshalb eine etwas geringere Schweißenergie erforderlich ist. Natürlich ist dies nur beispielhaft und es könnten auch in beiden Schweißprozessen identische Schweißparameter verwendet werden.

In der Kurzschluss-Schweißphase SPA1, SPB1 wird bekanntermaßen zumindest ein Kurzschlusszyklus ZKA, ZKB durchgeführt, in welchem die jeweilige Elektrode 3A, 3B in Richtung des Grundstoffs bewegt wird, bis ein Kurzschluss gebildet wird und vorzugsweise nach Bildung des Kurschlusses wieder in entgegengesetzte Richtung vom Grundstoff 6 wegbewegt wird, wie im unteren Diagramm anhand der Vorschubgeschwindigkeit vA, vB ersichtlich ist. Der Zeitpunkt der Kurzschlussbildung ist durch einen Anstieg des Schweißstroms IA, IB bzw. insbesondere durch einen gleichzeitigen Abfall der Schweißspannung UA, UB erkennbar. Der Zeitpunkt der Kurzschlussbildung kann in vorteilhafter Weise als charakteristisches erstes Synchronisationsereignis SEA1, SEB1 der Kurzschluss-Schweißphase SPA1, SPB1 im Sinne der Erfindung verwendet werden, um die beiden Kurzschluss-Schweißphasen SPA1, SPB1 zeitlich miteinander synchronisieren zu können, wie nachfolgend noch erläutert wird. Alternativ kann anstelle des Zeitpunkts der tatsächlichen Kurzschlussbildung als charakteristisches erstes Synchronisationsereignis SEA1, SEB1 der Kurzschluss-Schweißphase SPA1, SPB1 aber beispielsweise auch ein Zeitpunkt einer (in Fig.5 beispielhaft dargestellten) kurzfristigen Erhöhung der Vorschubgeschwindigkeit vA, vB verwendet werden, die bewusst kurz vor dem Zeitpunkt der tatsächlichen Kurzschlussbildung durchgeführt wird, um die Kurzschlussbildung zu triggern.

In den dargestellten Beispielen ist jeweils nur ein einziger Kurzschlusszyklus ZKA, ZKB je Kurzschluss-Schweißphase SPA1, SPB1 dargestellt, natürlich könnten aber auch mehrere Kurzschlusszyklen ZKA, ZKB durchgeführt werden. Beispielsweise können zwei bis zehn Kurzschlusszyklen ZKA, ZKB je Kurzschluss-Schweißphase SPA1, SPB1 durchgeführt werden. Durch Vorgabe der Anzahl der Kurzschlusszyklen ZKA, ZKB kann die Dauer der Kurzschluss-Schweißphase SPA1, SPB1 festgelegt werden, und somit die Zeit definiert werden, in der ein (relativ zur Warmschweißphase SPA2, SPB2 bzw. Impuls-Schweißphase) geringerer Wärmeeintrag in den Grundstoff 6 erfolgen soll. In einem Kurzschlusszyklus ZKA, ZKB kann der Schweißstrom IA, IB auch verändert werden, insbesondere kann ein bestimmter Verlauf des Schweißstroms IA, IB von der jeweiligen Steuerungseinheit 9A, 9B eingeregelt werden. Beispielsweise kann der Schweißstrom IA, IB während eines Kurzschlusszyklus ZKA, ZKB zusätzlich zur reversierenden Drahtvorschubgeschwindigkeit vA, vB von einem Grundstrom (der gleich oder verschieden zum Grundstrom IGA, IGB der Impuls-Schweißphase SPA2, SPB2 sein kann) auf einen relativ zum Grundstrom höheren (und relativ zum Impulsstrom IPA, IPB der Impuls-Schweißphase SPA2, SPB2 niedrigeren) Booststrom erhöht und wieder auf den Grundstrom gesenkt werden, um die Tropfenablöse zu unterstützen.

Im Beispiel gemäß Fig.2 sind die Kurzschluss-Schweißphasen SPA1, SPB1 mit einer ersten Phasenverschiebung ϕ1=0 zeitlich synchronisiert, d.h. die Kurzschlusszyklen ZKA, ZKB der beiden parallel durchgeführten Schweißprozesse an den Elektroden 3A, 3B werden zeitgleich durchgeführt. Die Synchronisierung erfolgt wie bereits beschrieben auf Basis jeweils zumindest eines ersten Synchronisationsereignisses SEA1, SEB1 je Kurzschluss-Schweißphase SPA1, SPB1, wobei hier der Zeitpunkt der Kurzschlussbildung in den Kurzschlusszyklen ZKA, ZKB als erstes Synchronisationsereignis SEA1, SEB1 vorgesehen ist. Die Impuls-Schweißphasen SPA2, SPB2 sind im gezeigten Beispiel mit einer zweiten Phasenverschiebung ϕ2=180° zeitlich synchronisiert, d.h. die Impulszyklen ZPA, ZPB werden zeitlich versetzt zueinander durchgeführt, wie anhand des Schweißstroms IA, IB und anhand der Schweißspannung UA, UB erkennbar ist. Die Synchronisierung der Impuls-Schweißphasen SPA2, SPB2 erfolgt wiederum auf Basis jeweils zumindest eines zweiten Synchronisationsereignisses SEA2, SEB2 je Impuls-Schweißphase SPA2, SPB2, wobei hier der Zeitpunkt der Tropfenablöse, also der Anstieg vom Grundstrom IGA, IGB auf den Impulsstrom IPA, IPB als zweites Synchronisationsereignis SEA2, SEB2 vorgesehen ist. Die Impulsfrequenzen fA, fB sind vorzugsweise gleich groß, wie in Fig.2 ersichtlich ist. Die Impulsfrequenzen könnten aber auch unterschiedlich groß sein, wobei die jeweils höhere Impulsfrequenz fA, fB vorzugsweise ein ganzzahliges Vielfaches der jeweils geringeren Impulsfrequenz fA, fB beträgt.

Im Beispiel gemäß Fig.3 sind die Kurzschluss-Schweißphasen SPA1, SPB1 mit einer Phasenverschiebung ϕ1=0 zeitlich synchronisiert und die Impuls-Schweißphasen SPA2, SPB2 sind ebenfalls mit einer Phasenverschiebung ϕ2=0° zeitlich synchronisiert, d.h. sowohl die Kurzschlusszyklen ZKA, ZKB, als auch die Impulszyklen ZPA, ZPB werden synchron durchgeführt, wie anhand des Schweißstroms IA, IB und anhand der Schweißspannung UA, UB erkennbar ist. Die Synchronisierung erfolgt wiederum analog auf Basis der Zeitpunkte der Kurzschluss-Bildung als erste Synchronisationsereignisse SEA1, SEB1 der Kurzschluss-Schweißphasen SPA1, SPB1 und auf Basis der Tropfenablöse als zweite Synchronisationsereignisse SEA2, SEB2 der Impuls-Schweißphasen SPA2, SPB2.

Im Beispiel gemäß Fig.4 sind die Kurzschluss-Schweißphasen SPA1, SPB1 mit einer Phasenverschiebung ϕ1=180° zeitlich synchronisiert und die Impuls-Schweißphasen SPA2, SPB2 sind ebenfalls mit einer Phasenverschiebung ϕ2=180° zeitlich synchronisiert. Das bedeutet, dass sowohl die Kurzschlusszyklen ZKA, ZKB, als auch die Impulszyklen ZPA, ZPB zeitlich versetzt durchgeführt werden, wie anhand des Schweißstroms IA, IB, anhand der Schweißspannung UA, UB und für die Kurzschluss-Schweißphasen SPA1, SPB1 auch anhand der Vorschubgeschwindigkeit vA, vB erkennbar ist. Die Synchronisierung erfolgt wiederum auf Basis der Zeitpunkte der Kurzschluss-Bildung als erste Synchronisationsereignisse SEA1, SEB1 der Kurzschluss-Schweißphasen SPA1, SPB1 und auf Basis der Tropfenablöse als zweite Synchronisationsereignisse SEA2, SEB2 der Impuls-Schweißphasen SPA2, SPB2. Natürlich könnten aber auch andere charakteristische Zeitpunkte als erste Synchronisationsereignisse SEA1, SEB1 und zweite Synchronisationsereignisse SEA2, SEB2 vorgesehen sein.

Im Beispiel gemäß Fig.5 sind schließlich die Kurzschluss-Schweißphasen SPA1, SPB1 mit einer Phasenverschiebung ϕ1=180° zeitlich synchronisiert und die Impuls-Schweißphasen SPA2, SPB2 sind mit einer Phasenverschiebung ϕ2=0° zeitlich synchronisiert. Das bedeutet, dass die Kurzschlusszyklen ZKA, ZKB zeitlich versetzt durchgeführt werden und die Impulszyklen ZPA, ZPB synchron durchgeführt werden, wie anhand des Schweißstroms IA, IB, anhand der Schweißspannung UA, UB und für die Kurzschluss-Schweißphasen SPA1, SPB1 auch anhand der Vorschubgeschwindigkeit vA, vB erkennbar ist. Die Synchronisierung erfolgt wiederum auf Basis der Zeitpunkte der Kurzschluss-Bildung als erste Synchronisationsereignisse SEA1, SEB1 der Kurzschluss-Schweißphasen SPA1, SPB1 und auf Basis der Tropfenablöse als zweite Synchronisationsereignisse SEA2, SEB2 der Impuls-Schweißphasen SPA2, SPB2.

Der Vollständigkeit halber ist im unteren Diagramm in Fig.5 zusätzlich auch die bereits erwähnte kurzfristige Erhöhung der Vorschubgeschwindigkeit vA, vB als alternatives Synchronisationsereignis SEA1', SEB1' der Kurzschluss-Schweißphasen SPA1, SPB1 eingezeichnet (gepunktete Linie). Hierbei wird die Vorschubgeschwindigkeit vA, vB zu einem festgelegten Zeitpunkt bewusst kurzzeitig erhöht, um die Kurzschlussbildung auszulösen. Die Erhöhung der Drahtvorschubgeschwindigkeit ist in Fig. 5 sprunghaft eingezeichnet. Die Erhöhung der Drahtvorschubgeschwindigkeit kann aber natürlich auch stetig erfolgen. Der Zeitpunkt ist dabei aufgrund des durchgeführten bekannten Schweißprozesses mit bekannten zeitlichen Verläufen der Schweißparameter natürlich ebenfalls bekannt.

Durch die erfindungsgemäße zeitliche Synchronisierung können die parallel durchgeführten Schweißprozesse des Mehrfach-Schweißverfahrens in gewünschter Weise aufeinander abgestimmt werden, sodass sich die zwei (oder mehreren) Schweißprozesse möglichst wenig gegenseitig negativ beeinflussen. Abschließend sei erwähnt, dass die beschriebenen Ausführungsformen natürlich nur beispielhaft und nicht einschränkend für die Erfindung sind und dass die konkrete Ausführung im Ermessen des Fachmanns liegt.

## Patentansprüche

1. Verfahren zur Durchführung eines Mehrfach-Schweißverfahrens mit zumindest zwei abschmelzenden Elektroden (3A, 3B) an einem Grundstoff (6), wobei an jeder Elektrode (3A, 3B) nach dem Zünden eines Lichtbogens zwischen der Elektrode (3A, 3B) und dem Grundstoff (6) ein Schweißprozess durchgeführt wird und wobei die Schweißprozesse der zumindest zwei Elektroden (3A, 3B) zeitlich synchronisiert werden, **dadurch gekennzeichnet, dass** an den zumindest zwei Elektroden (3A, 3B) jeweils ein Schweißprozess mit einer Kurzschluss-Schweißphase (SPA1, SPB1) und einer Warmschweißphase (SPA2, SPB2) mit relativ zur Kurzschluss-Schweißphase (SPA1, SPB1) höherem Wärmeeintrag in den Grundstoff (6) durchgeführt wird, wobei sich die Kurzschluss-Schweißphase (SPA1, SPB1) und die Warmschweißphase (SPA2, SPB2) periodisch abwechseln **und dass** zumindest die Kurzschluss-Schweißphasen (SPA1, SPB1) der Schweißprozesse der zumindest zwei Elektroden (3A, 3B) anhand zumindest eines festgelegten ersten Synchronisationsereignisses (SEA1, SEB1) je Kurzschluss-Schweißphase (SPA1, SPB1) zeitlich synchronisiert werden.

2. Verfahren nach Anspruch 1, **dadurch gekennzeichnet, dass** die Kurzschluss-Schweißphasen (SPA1, SPB1) zeitlich synchronisiert werden, indem eine erste Phasenverschiebung (ϕ1) zwischen den ersten Synchronisationsereignissen (SEA1, SEB1) vorgesehen wird.

3. Verfahren nach Anspruch 1 oder 2, **dadurch gekennzeichnet, dass** als erstes Synchronisationsereignis (SEA1, SEB1) ein Zeitpunkt einer Kurzschlussbildung in der Kurzschluss-Schweißphase (SPA1, SPB1) oder ein Zeitpunkt, einer zur Kurzschlussbildung durchgeführten Erhöhung einer Vorschubgeschwindigkeit (vA, vB) oder ein Zeitpunkt einer zur Kurzschlussbildung durchgeführten Reduktion eines Schweißstroms (IA, IB) verwendet wird.

4. Verfahren nach einem der Ansprüche 1 bis 3, **dadurch gekennzeichnet, dass** in der Kurzschluss-Schweißphase (SPA1, SPB1) zumindest ein Kurzschlusszyklus (ZKA, ZKB) durchgeführt wird, in welchem die jeweilige Elektrode (3A, 3B) in Richtung des Grundstoffs (6) bewegt wird, bis ein Kurzschluss gebildet wird und nach Bildung des Kurschlusses in entgegengesetzte Richtung vom Grundstoff (6) wegbewegt wird, wobei vorzugsweise zwei bis zehn Kurzschlusszyklen (ZKA, ZKB) in der Kurzschluss-Schweißphase durchgeführt werden.

5. Verfahren nach einem der Ansprüche 1 bis 4, **dadurch gekennzeichnet, dass** als Warmschweißphase (SPA2, SPB2) eine Impuls-Schweißphase oder eine Sprühlichtbogen-Schweißphase verwendet wird, wobei in der Impuls-Schweißphase mehrere, mit einer Impulsfrequenz (fA, fB) aufeinanderfolgende Impulszyklen (ZPA, ZPB) durchgeführt werden, in denen sich jeweils eine Grundstromphase mit einem Grundstrom (IGA, IGB) und ein Impulsstromphase mit einem relativ zum Grundstrom (IGA, IGB) höheren Impulsstrom (IPA, IPB) abwechseln und in der Sprühlichtbogen-Schweißphase ein konstanter Schweißstrom verwendet wird.

6. Verfahren nach Anspruch 5, **dadurch gekennzeichnet, dass** die Impuls-Schweißphasen (SPA1, SPB1) der Schweißprozesse der zumindest zwei Elektroden (3A, 3B) anhand zumindest eines festgelegten zweiten Synchronisationsereignisses (SEA2, SEB2) je Impuls-Schweißphase (SPA2, SPB2) zeitlich synchronisiert werden.

7. Verfahren nach Anspruch 6, **dadurch gekennzeichnet, dass** die Impuls-Schweißphasen (SPA2, SPB2) zeitlich synchronisiert werden, indem eine zweite Phasenverschiebung (ϕ2) zwischen den zweiten Synchronisationsereignissen (SEA2, SEB2) vorgesehenen wird.

8. Verfahren nach Anspruch 6 oder 7, **dadurch gekennzeichnet, dass** als zweites Synchronisationsereignis (SEA2, SEB2) ein charakteristischer Zeitpunkt in der Impuls-Schweißphase (SPA2, SPB2) verwendet wird, vorzugsweise ein Zeitpunkt einer Änderung eines Schweißparameters (U, I, v) oder ein Zeitpunkt einer Tropfenablöse von der Elektrode (3A, 3B)

9. Vorrichtung (1) zur Durchführung eines Mehrfach-Schweißverfahrens, wobei in der Vorrichtung zumindest zwei Schweißgeräte (A, B) zur Durchführung jeweils eines Schweißprozesses mit einer abschmelzenden Elektrode (3A, 3B) an einem Grundstoff (6) vorgesehen sind, wobei jedes Schweißgerät (A, B) eine Steuerungseinheit (9A, 9B) zur Steuerung des jeweiligen Schweißprozesses aufweist und wobei die Steuerungseinheiten (9A, 9B) der zumindest zwei Schweißgeräte (A, B) über eine Kommunikationsverbindung (11) verbunden sind, um die Schweißprozesse zeitlich zu synchronisieren, **dadurch gekennzeichnet, dass** die Steuerungseinheiten (9A, 9B) dazu ausgebildet sind, jeweils einen Schweißprozess mit einer Kurzschluss-Schweißphase (SPA1, SPB1) und einer Warmschweißphase (SPA2, SPB2) mit relativ zur Kurzschluss-Schweißphase höherem Wärmeeintrag in den Grundstoff (6) durchzuführen, die sich periodisch abwechseln **und dass** zumindest die Steuerungseinheit (9A) eines ersten Schweißgeräts (A) dazu ausgebildet ist, zumindest eine Synchronisationsinformation (Y) über ein festgelegtes erstes Synchronisationsereignis (SEA1) der Kurzschluss-Schweißphase (SPA1) des mit dem ersten Schweißgerät (A) durchgeführten Schweißprozesses über die Kommunikationsverbindung (11) an die Steuerungseinheit (9B) des zumindest einen zweiten Schweißgeräts (B) zu senden, wobei die Steuerungseinheit (9B) des zumindest einen zweiten Schweißgeräts (B) dazu ausgebildet ist, den mit dem zweiten Schweißgerät (B) durchgeführten Schweißprozess mittels der erhaltenen Synchronisationsinformation (Y) anhand eines festgelegten ersten Synchronisationsereignisses (SEB1) der Kurzschluss-Schweißphase (SPB1) des mit dem zweiten Schweißgerät (B) durchgeführten Schweißprozesses zeitlich mit dem Schweißprozess des ersten Schweißgeräts (A) zu synchronisieren.

10. Vorrichtung nach Anspruch 9, **dadurch gekennzeichnet, dass** die Synchronisationsinformation (Y) zumindest eine erste Phasenverschiebung (ϕ1) zwischen den ersten Synchronisationsereignissen (SEA1, SEB1) enthält.

11. Vorrichtung nach einem der Ansprüche 9 oder 10, **dadurch gekennzeichnet, dass** als erstes Synchronisationsereignis (SEA1, SEB1) ein Zeitpunkt einer Kurzschlussbildung in der Kurzschluss-Schweißphase (SPA1, SPB1) oder ein Zeitpunkt, einer zur Kurzschlussbildung durchgeführten Erhöhung einer Vorschubgeschwindigkeit (vA, vB) oder ein Zeitpunkt einer zur Kurzschlussbildung durchgeführten Reduktion eines Schweißstroms (IA, IB) vorgesehen ist.

12. Vorrichtung nach Anspruch 11, **dadurch gekennzeichnet, dass** jedes Schweißgerät (A, B) eine Schweißdrahtvorschubeinheit (14A, 14B) aufweist, die von der Steuerungseinheit (9A, 9B) ansteuerbar ist, wobei die Steuerungseinheit (9A, 9B) dazu ausgebildet ist, in der Kurzschluss-Schweißphase (SPA1, SPB1) zumindest einen Kurzschlusszyklus (ZKA, ZKB) durchzuführen, in welchem die Schweißdrahtvorschubeinheit (14A, 14B) die Elektrode (3A, 3B) in Richtung des Grundstoffs (6) bewegt, bis sich ein Kurzschluss bildet und nach Bildung des Kurschlusses in entgegengesetzte Richtung vom Grundstoff (6) wegbewegt, wobei in der Kurzschluss-Schweißphase (SPA1, SPB1) vorzugsweise zwei bis zehn Kurzschlusszyklen (ZKA, ZKB) durchführbar sind.

13. Vorrichtung nach Anspruch 11 oder 12, **dadurch gekennzeichnet, dass** die Steuerungseinheiten (9A, 9B) dazu ausgebildet sind, als Warmschweißphase (SPA2, SPB2) eine Impuls-Schweißphase mit mehreren, mit einer Impulsfrequenz (fA, fB) aufeinanderfolgenden Impulszyklen (ZPA, ZPB) durchzuführen, in denen sich jeweils eine Grundstromphase mit einem Grundstrom (IGA, IGB) und ein Impulsstromphase mit einem relativ zum Grundstrom (IGA, IGB) höheren Impulsstrom (IPA, IPB) abwechseln **oder dass** die Steuerungseinheiten (9A, 9B) dazu ausgebildet sind, als Warmschweißphase (SPA2, SPB2) eine Sprühlichtbogen-Schweißphase mit einem konstanten Schweißstrom durchzuführen.

14. Vorrichtung nach einem der Ansprüche 10 bis 13, **dadurch gekennzeichnet, dass** zumindest die Steuerungseinheit (9A) des ersten Schweißgeräts (A) dazu ausgebildet ist, eine Synchronisationsinformation (Y) über ein festgelegtes zweites Synchronisationsereignis (SEA2) der Impuls-Schweißphase (SPA2) des mit dem ersten Schweißgerät (A) durchgeführten Schweißprozesses über die Kommunikationsverbindung (11) an die Steuerungseinheit (9B) des zumindest einen zweiten Schweißgeräts (B) zu senden, wobei die Steuerungseinheit (9B) des zumindest einen zweiten Schweißgeräts (B) dazu ausgebildet ist, den mit dem zweiten Schweißgerät (B) durchgeführten Schweißprozess mittels der erhaltenen Synchronisationsinformation (Y) anhand eines festgelegten zweiten Synchronisationsereignisses (SEB2) der Impuls-Schweißphase (SPB2) des mit dem zweiten Schweißgerät (B) durchgeführten Schweißprozesses zeitlich mit dem Schweißprozess des ersten Schweißgeräts (A) zeitlich zu synchronisieren.

15. Vorrichtung nach Anspruch 14, **dadurch gekennzeichnet, dass** die Synchronisationsinformation (Y) zumindest eine Phasenverschiebung (ϕ2) zwischen den zweiten Synchronisationsereignissen (SEA2, SEB2) enthält, wobei als zweites Synchronisationsereignis (SEA2, SEB2) vorzugsweise ein charakteristischer Zeitpunkt in der Impuls-Schweißphase (SPA2, SPB2) vorgesehen ist, besonders bevorzugt ein Zeitpunkt einer Tropfenablöse von der Elektrode (3A, 3B) oder ein Zeitpunkt einer Änderung eines Schweißparameters (U, I, v).
